# EUROPEAN PATENT SPECIFICATION

(11) **EP 1 529 734 B1**
(45) Date of publication and mention of the grant of the patent: **13.02.2008**
(21) Application number: 04078073.6
(22) Date of filing: 04.11.2004
(51) Int. Cl.: B65D 41/04, B65D 41/32, B65D 41/34

(54) **Screw stopper system with a prolonged seal**
Schraubverschlusses mit verlängerter Dichtung
Bouchon vissable avec garniture d'étanchéité prolongée

(30) Priority: 05.11.2003 IT MI20032132
(43) Date of publication of application: 11.05.2005
(73) Proprietor: Ferrari, Silvia, 26851 Borgo san Giovanni, Lodi (IT); Ferrari, Guglielmo, 26851 Borgo san Giovanni, Lodi (IT)
(72) Inventor: Ferrari, Silvia, 26851 Borgo san Giovanni, Lodi (IT); Ferrari, Guglielmo, 26851 Borgo san Giovanni, Lodi (IT)
(74) Representative: De Gregori, Antonella

(56) References cited:
- WO-A-03/022701
- FR-A- 1 143 426
- US-B1- 6 325 226

## Description

The presents invention relates to a screw stopper system with a prolonged seal.

In particular, the invention relates to a stopper system with a stopper preferably made of a plastic material equipped with a security band.

Screw stopper systems have been known for some time and envisage various expedients for the sealed closing of bottles with a stopper, to make tampering with the closure difficult and above all visible.

The stoppers of the known art also have sealing devices for preventing leakage or degassing of the contents.

A threaded stopper of this type is described in Swiss patent application 609,942 and comprises a substantially truncated-conical sealing strip which extends from the lower surface of the bottom, so that it can be inserted within the end of the bottleneck to allow the sealing of the stopper.

Another threaded stopper according to the known art is described in European patent Nr. 0 960 054 in the name of Bericap.

The stopper according to the Bericap patent is equipped with a substantially cylindrical skirt with internal threading and closed by a disk-shaped head bottom.

A sealing strip extends axially from the inner side of the bottom, with an outer diameter equal to or slightly higher and an internal diameter much smaller than the outer diameter of the bottleneck.

Outside this sealing strip, in correspondence with the joint between the bottom and skirt, there is an enlargement with a substantially cylindrical internal surface whose internal diameter corresponds to the sum of the outer diameter of the neck and double the value of the thickness of the sealing strip, or it is preferably slightly less than this sum.

With this configuration consisting of a double sealing strip, the stopper according to the Bericap patent claims to obtain a better seal.

In the above stopper, it can be substantially observed that the seal is obtained thanks to a considerable deformation of the outer strip which presses it against the wall of the stopper skirt, provided, for the purpose, with an enlargement.

In contrast with this significant deformation of the outer skirt, there is a reduced deformation of the inner skirt having an olive configuration.

Although the problem of obtaining an effective seal has been faced in the above inventions when the stopper is perfectly screwed onto the bottle, the problem has not as yet been solved as to how to maintain the seal of the stopper on the bottle in the case of accidental or deliberate tampering which causes its unscrewing.

In other words, in the stoppers according to the known art, as soon as these are unscrewed, they completely lose their sealing property, with the result that the contents may be possibly polluted by external contaminants and/or degraded by contact with the environment.

This drawback is heightened by the fact that this may occur in spite of the presence of the security band.

The security band or "tamper evident band" is, in fact, envisaged to be detached upon breakage of the bridges that connect it to the stopper, due to the elasticity of the material of which it is made, however, there is a certain clearance which allows an initial rotation and loss of seal without visible evidence that it has been tampered with.

The security band can, in fact, be rotated before reaching the breakage tension of the bridges, particularly if it is simply wound around the neck and to a lesser extent when the bottle and band are equipped with blockage systems for preventing its rotation.

Consequently, in the known stopper systems, a slight tampering may not be visible but cause the pollution of or damage to the contents.

The main objective of the present invention is to provide a screw stopper system with a prolonged seal which achieves a coupling between stopper and bottle that guarantees sealing also in an initial unscrewing phase and/or until the evident detachment of the security band.

This and other objectives according to the present invention are achieved by means of a screw stopper system with a prolonged seal according to what is specified in claim 1.

Further characteristics of the invention are the object of the dependent claims.

The screw stopper system with a prolonged seal according to the present invention comprises a stopper equipped with a cylindrical skirt closed by a bottom having a nut screw suitable for being inserted on the mouth end of a bottleneck in turn equipped with threading, the skirt also being connected to a security band by means of bridges, the bottom being provided with a pair of sealing strips extending from its internal surface, an internal sealing strip and a smaller outer sealing strip positioned outside the former, respectively, so as to surround the mouth end of the bottleneck to ensure sealing; the mouth end has an annular enlargement facing outwards and subdivided into two overlying annular portions, an upper annular portion and a lower annular portion, the upper annular portion outwardly protruding to a larger extent than the lower annular portion, the upper annular portion and the lower annular portion having a substantially similar height, and the outer strip has a height equal to approximately double the height of the upper annular portion.

The characteristics and advantages of a screw stopper system with a prolonged seal according to the present invention will appear more evident from the following illustrative and non-limiting description, referring to the enclosed schematic drawings, in which:

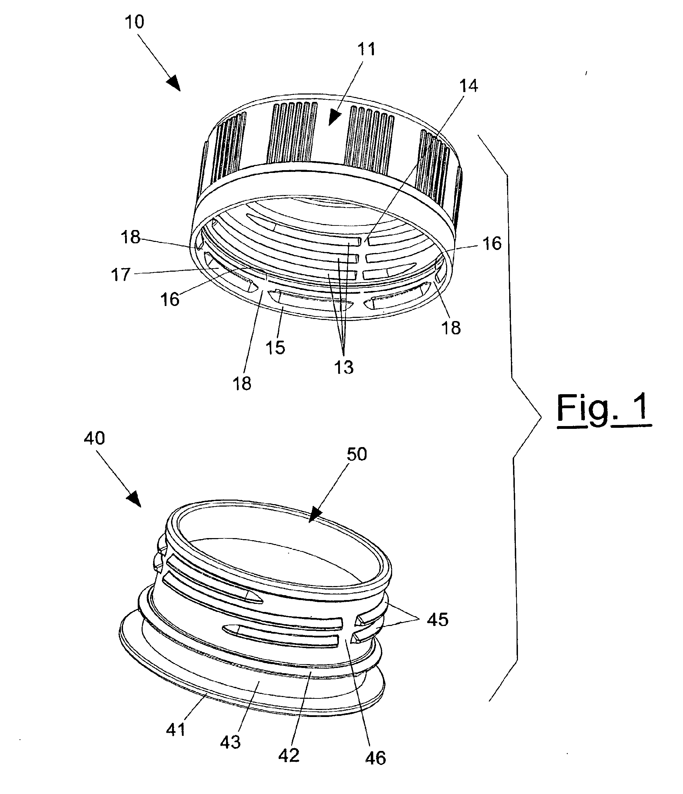

figure 1 is an exploded perspective schematic view of the system according to the invention;

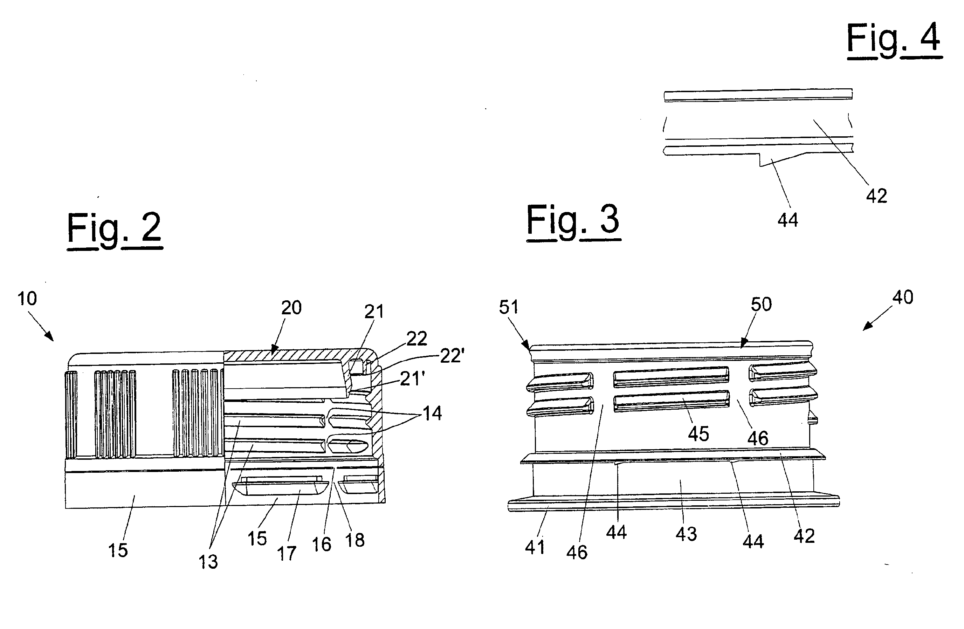

figure 2 is a partial sectional view of the stopper of the system of figure 1;
figure 3 is a partial raised view of the bottleneck of figure 1;
figure 4 is a view of a detail of the bottleneck of figure 3;
figure 5 is a raised sectional view of the system, with the stopper completely inserted on the bottleneck;
figure 6 is a detail of figure 5;
figure 7 is a raised sectional view of the system with the stopper slightly rotated at initial unscrewing.

With reference to the figures, a screw stopper system with a prolonged seal comprises a stopper 10 equipped with a cylindrical skirt 11 closed by a bottom 20.

Along the internal surface of the cylindrical skirt 11, there is a nut screw 13, preferably, but not exclusively, with three principles and equipped with degassing channels 14.

The skirt 11 is connected to a security band 15 by means of bridges 16.

The bottom 20 is provided with a pair of sealing strips extending from its internal surface, respectively an internal sealing strip 21 destined for being inserted inside a bottleneck 40 being subjected to a significant inward deformation.

The bottom is equipped with an outer sealing strip 22 smaller than the other sealing strip and positioned outside this, so as to externally surround the mouth end 50 of the bottleneck 40 to ensure sealing by means of a small deformation.

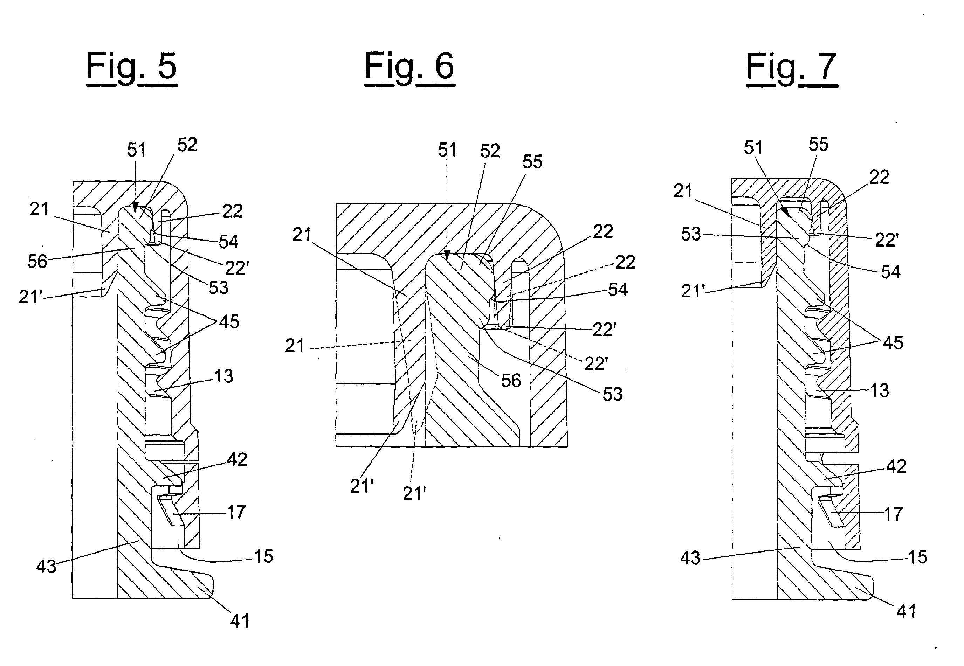

For this purpose, with particular reference to figure 6, the diameters of the internal sealing strip 21 and external sealing strip 22 are respectively greater than the internal diameter of the neck and smaller than the external diameter of the neck, in the contact area.

The internal strip 21 is inclined towards the skirt but has a tapered end 21' towards the centre of the bottom, creating the possibility of a better insertion inside the bottleneck.

The outer strip is substantially cylindrical and has a rounded end 22' to facilitate the insertion of the mouth end 50 of the bottleneck.

The security band 15, commonly known as "tamper evident band" has protrusions 17 separated by interruptions 18.

The bottleneck 40 is provided with a pair of ring nuts, a lower ring nut 41 and an upper ring nut 42 suitable for defining a channel 43 envisaged for housing the security band 15.

The upper ring nut 42 is also equipped with teeth 44, which extend from its lower surface to be coupled with and block the protrusions 17 of the security band 15 by positioning in the interruptions 18, to prevent the rotation of the security band 15 when the stopper is being unscrewed.

In correspondence with the nut screw 13 of the stopper, the bottleneck has a threading 45 in turn equipped with degassing channels 46.

The mouth end 50 of the bottleneck 40 has an annular enlargement 51 facing outwards and subdivided into two overlying annular portions, an upper annular portion 52 and a lower annular portion 53, connected by means of an inclined connecting surface 54.

The upper annular portion 52 protrudes outwards to a greater extent with respect to the lower annular portion 53 and both protrude with respect to the side surface 56 of the bottleneck.

In particular, the upper annular portion 52 and the lower annular portion 53 have a substantially similar height and the height of the outer strip 22 is equal to approximately double the height of the upper annular portion 52, i.e. substantially equal to the whole annular enlargement 51.

A prolonged contact is thus obtained with the outer strip 22 when the stopper is being unscrewed.

In this way, in fact, the outer strip 22 remains in contact with the upper annular portion 52, maintaining the seal, for high unscrewing angles.

In practice, a sealed contact is still obtained when the bridges 16 of the security band 15 have already been broken and tampering is evident.

The upper annular portion 52 consequently integrates the twofold function of concentrating all the pressure of the outer strip in substantially half of the area, increasing the seal, and stiffening the mouth end of the bottleneck to prevent the necessity of a significant deformation of the inner strip 21 to confer said rigidity to the coupling.

The mouth end 50 of the bottleneck is also equipped with a rounded outer edge 55 to facilitate the stopper system.

## Claims

1. A screw stopper system with a prolonged seal comprising a bottleneck (40) and a stopper (10) equipped with a cylindrical skirt (11) closed by a bottom (20) having a nut screw (13) suitable for being inserted on the mouth end (50) of the bottleneck (40) in turn equipped with threading (45), the skirt (11) also being connected to a security band (15) by means of bridges (16), the bottom (20) being provided with a pair of sealing strips extending from its internal surface, an internal sealing strip (21) and a smaller outer sealing strip (22) positioned outside the former, respectively, so as to surround the mouth end (50) of the bottleneck (40) to ensure sealing, the mouth end having an annular enlargement (51) facing outwards the system being **characterized in that** the mouth end (50) is subdivided into two overlying annular portions, an upper annular portion (52) and a lower annular portion (53), the upper annular portion (52) outwardly protruding to a larger extent with respect to the lower annular portion (53), and **in that** the upper annular portion (52) and the lower annular portion (53) have a substantially similar height, and the outer strip (22) has a height equal to approximately double the height of the upper annular portion (52).

2. The stopper system according to claim 1, wherein the diameters of the internal sealing strip (21) and the external sealing strip (22) are greater than the internal diameter of the neck (40) and smaller than the outer diameter of the neck, respectively, in the contact areas.

3. The stopper system according to claim 2, wherein said internal sealing strip (21) has the purpose of being inserted inside the bottleneck (40) and is subjected to a significant inward deformation.

4. The stopper system according to claim 2, wherein said outer sealing strip (22) externally surrounds the mouth end (50) of the bottleneck (40) to ensure sealing by means of a small deformation.

5. The stopper system according to claim 1, wherein the bottleneck (40) is provided with a pair of ring nuts, a lower ring nut (41) and an upper ring nut (42) suitable for defining a channel (43) envisaged for housing the security band (15).

6. The stopper system according to claim 5, wherein the security band (15) is provided with protrusions (17) separated by interruptions (18) suitable for receiving teeth (44) which extend from the lower surface of the upper ring nut (42) for connection with and blockage of the security band (15), preventing it from rotating during the unscrewing of the stopper.

## Patentansprüche

1. Schraubverschlusssystem mit einer verlängerten Dichtung, umfassend einen Flaschenhals (40) und einen Verschluss (10), der mit einer zylindrischen Einfassung (11) ausgestattet ist, die durch einen Boden (20) geschlossen ist und eine Schraubenmutter (13) aufweist, die zum Einsetzen auf das Mündungsende (50) des Flaschenhalses (40) geeignet ist, das seinerseits mit einem Gewinde (45) ausgestattet ist, wobei die Einfassung (11) auch mit einem Sicherheitsband (15) durch Brücken (16) verbunden ist, wobei der Boden (20) mit einem Paar von Dichtstreifen, die von seiner Innenfläche wegführen, einem inneren Dichtstreifen (21) bzw. einem kleineren äußeren Dichtstreifen (22), versehen ist, der außerhalb des vorhergehenden positioniert ist, um so das Mündungsende (50) des Flaschenhalses (40) zu umgeben und damit eine Abdichtung sicherzustellen, wobei das Mündungsende eine ringförmige Vergrößerung (51) aufweist, die nach außen weist, wobei das System **dadurch gekennzeichnet ist, dass** das Mündungsende (50) in zwei übereinander liegende ringförmige Abschnitte, einen oberen ringförmigen Abschnitt (52) und einen unteren ringförmigen Abschnitt (53), unterteilt ist, wobei der obere ringförmige Abschnitt (52) in einem größeren Ausmaß bezüglich des unteren ringförmigen Abschnitts (53) nach außen vorragt, und dass der obere ringförmige Abschnitt (52) und der untere ringförmige Abschnitt (53) eine im Wesentlichen ähnliche Höhe besitzen und der Außenstreifen (22) eine Höhe besitzt, die gleich etwa dem Doppelten der Höhe des oberen ringförmigen Abschnitts (52) ist.

2. Verschlusssystem nach Anspruch 1, wobei die Durchmesser des inneren Dichtstreifens (21) und des äußeren Dichtstreifens (22) in den Kontaktbereichen größer als der Innendurchmesser des Halses (40) bzw. kleiner als der Außendurchmesser des Halses sind.

3. Verschlusssystem nach Anspruch 2, wobei der innere Dichtstreifen (21) dazu dient, in den Flaschenhals (40) eingesetzt zu werden, und einer erheblichen Einwärtsverformung ausgesetzt ist.

4. Verschlusssystem nach Anspruch 2, wobei der äußere Dichtstreifen (22) das Mündungsende (50) des Flaschenhalses (40) außerhalb umgibt, um eine Abdichtung mittels einer kleinen Verformung sicherzustellen.

5. Verschlusssystem nach Anspruch 1, wobei der Flaschenhals (40) mit einem Paar von Ringmuttern, einer unteren Ringmutter (41) und einer oberen Ringmutter (42) versehen ist, das zur Definition eines Kanals (43) geeignet sind, der zur Aufnahme des Sicherheitsbandes (15) vorgesehen ist.

6. Verschlusssystem nach Anspruch 5, wobei das Sicherheitsband (15) mit Vorsprüngen (17) versehen ist, die durch Unterbrechungen (18) getrennt sind, die zur Aufnahme von Zähnen (44) geeignet sind, die von der unteren Fläche der oberen Ringmutter (42) zur Verbindung mit und Blockierung des Sicherheitsbandes (15) wegführen, wodurch verhindert wird, dass dieses sich beim Abschrauben des Verschlusses dreht.

## Revendications

1. Système de bouchon à vis avec un joint d'étanchéité prolongé comprenant un goulot (40) et un bouchon (10) équipé avec une jupe cylindrique (11) fermée par un fond (20) ayant une vis (13) appropriée pour être insérée sur l'extrémité d'embouchure (50) du goulot (40) équipé à son tour de filetage (45), la jupe (11) étant également raccordée à une bande de sécurité (15) au moyen de ponts (16), le fond (20) étant prévu avec une paire de bandes d'étanchéité s'étendant à partir de sa surface interne, une bande d'étanchéité interne (21) et une bande d'étanchéité externe (22) plus petite, positionnée à l'extérieur de la première, respectivement, afin d'entourer l'extrémité d'embouchure (50) du goulot (40) pour réaliser l'étanchéité, l'extrémité d'embouchure ayant un agrandissement annulaire (51) orienté vers l'extérieur, le système étant **caractérisé en ce que** l'extrémité d'embouchure (50) est divisée en deux parties annulaires superposées, une partie annulaire supérieure (52) et une partie annulaire inférieure (53), la partie annulaire supérieure (52) faisant saillie vers l'extérieur sur une plus grande étendue par rapport à la partie annulaire inférieure (53), et **en ce que** la partie annulaire supérieure (52) et la partie annulaire inférieure (53) ont une hauteur sensiblement similaire, et la bande externe (22) a une hauteur égale à approximativement le double de la hauteur de la partie annulaire supérieure (52).

2. Système de bouchon selon la revendication 1, dans lequel les diamètres de la bande d'étanchéité interne (21) et de la bande d'étanchéité externe (22) sont supérieurs au diamètre interne du goulot (40) et inférieurs au diamètre externe du goulot, respectivement, dans des zones de contact.

3. Système de bouchon selon la revendication 2, dans lequel ladite bande d'étanchéité interne (21) a le but d'être insérée à l'intérieur du goulot (40) et est soumise à une déformation significative vers l'intérieur.

4. Système de bouchon selon la revendication 2, dans lequel ladite bande d'étanchéité externe (22) entoure extérieurement l'extrémité d'embouchure (50) du goulot (40) pour garantir l'étanchéité au moyen d'une petite déformation.

5. Système de bouchon selon la revendication 1, dans lequel le goulot (40) est doté d'une paire de nervures annulaires, d'une nervure annulaire inférieure (41) et d'une nervure annulaire supérieure (42) appropriées pour définir une rainure (43) envisagée pour loger la bande de sécurité (15).

6. Système de bouchon selon la revendication 5, dans lequel la bande de sécurité (15) est prévue avec des saillies (17) séparées par des interruptions (18) appropriées pour recevoir des dents (44) qui s'étendent à partir de la surface inférieure de la nervure annulaire supérieure (42) pour le raccordement et le blocage de la bande de sécurité (15), l'empêchant de tourner pendant le dévissage du bouchon.
